# EUROPEAN PATENT APPLICATION

(11) **EP 0 877 192 A2**
(43) Date of publication of application: **11.11.1998**
(21) Application number: 97121824.3
(22) Date of filing: 11.12.1997
(51) Int. Cl.: F16L 37/42, F16L 37/23

(54) **Coupling**

(30) Priority: 10.05.1997 DE 29708412 U
(71) Applicant: Jiffy-Tite Company, Inc., Clarence, New York 14031 (US)
(72) Inventor: Zillig, Steven R., Clarence, New York 14031 (US)
(74) Representative: Berkenfeld, Helmut, Dipl.-Ing.

(57) **Abstract**

A coupling (12) for pipes or hoses for carrying liquids or gases comprises a plug sleeve (16) and a slidable sleeve (18) displaceable thereon between a coupling-locked position and a coupling-unlocked position. A coil spring (20) between the plug sleeve (16) and the slidable sleeve (18) urges the latter towards the locked position in the rest condition. The slidable sleeve (18) is partially guided by and displaceable on a recessed portion (42) of the periphery of the plug sleeve (16), the recessed portion (42) being adjacent an end of the plug sleeve (16). An identification groove (44) in the recessed portion (42) is exposed in the locked position of the slidable sleeve (18) but is covered over thereby in the unlocked position, to permit ready identification of the condition of the coupling (12).

## Description

The present invention concerns a coupling for coupling pipes or hoses carrying liquids or gases, comprising a plug sleeve and a sliding sleeve which is displaceable thereon between two limit positions or a locked position and an unlocked position, a coil spring which is stressed between the plug sleeve and the sliding sleeve and which pushes the sliding sleeve into the locked position in the rest condition, wherein the sliding sleeve is partially guided and displaceable by and on a recessed portion of the periphery of the plug sleeve and the recessed portion is arranged at one end of the plug sleeve.

Many different design configurations of couplings of that kind are known. They are also referred to as quick-action or quick-release couplings. Examples of such couplings are to be found in U.S. patent specification No. 4 612 953 and German patent specification No. 3 211 937. Such couplings serve for rapidly connecting pipes or tubes, hoses, hydraulic control lines and the like. Couplings of that kind may include a non-return valve. Such a valve will close off a line which is connected to the coupling, when the coupling is in the open condition and therefore prevents the liquid or gas from escaping.

The coupling has a sliding sleeve which is displaceable between two limit positions. In the one limit position the coupling is in a locked condition while it is unlocked in the other limit position. Under normal circumstances the coil spring urges the sliding sleeve into the locked position. It can happen however that this does not occur and the sliding sleeve then remains in that limit position in which the coupling is in an unlocked condition. When pressure is applied to the coupling the coupling then comes open and liquid or gas can escape. That is unacceptable and can give rise to damage and harm of greater or lesser severity. Therefore the users of a coupling are required to establish whether the coupling is properly locked, before pressure is applied to the arrangement. It will be appreciated however that lack of attention and carelessness, mistakes and errors can always occur. For such reasons it is not possible reliably to be certain that pipes, hoses or lines connected with the coupling are not already subjected to pressure prior to the coupling being actually locked in the coupled condition.

In consideration thereof the inventor set himself the problem of so designing a coupling that the user can recognize by a simple glance whether the coupling is locked or is still unlocked.

To solve that problem, the inventor proposes that a coupling of the general kind set forth in the opening part of this specification is of a configuration characterized by an identification groove which is provided in the recessed portion of the periphery of the plug sleeve and which is exposed in the locked condition of the sliding sleeve while being covered over thereby in the unlocked position of the sliding sleeve. The identification groove is disposed in the path of the sliding sleeve between the two limit positions thereof. In the locked condition of the sliding sleeve, the sliding sleeve exposes the identification groove while in its unlocked condition the sliding sleeve masks the identification groove. The groove is of such a size and configuration that a user of the coupling can see and recognize the groove without difficulty, using the naked eye. This means that an exposed identification groove which is thus visible to the user of the coupling indicates that the sliding sleeve is in the locked condition and thus the coupling is in the safe and reliable operating condition. If the user of the coupling cannot see the identification groove, that is because it is covered by the sliding sleeve and this in turn means that the coupling is not yet in a locked condition. Accordingly, a simple glance towards the identification groove means that the user of the coupling can see straightaway and without any difficulty whether the coupling is locked or unlocked. That reliably ensures that pressure is not applied to the coupling when it is still in an unlocked or open condition.

In order to ensure that the user can see and recognize the identification groove, even under poor lighting conditions and with a certain degree of carelessness in looking at the coupling, an advantageous embodiment of the invention provides that an easily visible material is disposed in the groove. In a further advantageous embodiment that easily visible material may be a color such as a paint. The color may be for example white. At any event the color involved should be one which contrasts heavily with the actual color of the material making up the plug sleeve.

In a further preferred embodiment of the invention it is proposed that an identification ring is fitted into the groove. The ring provides for easy recognizability, by virtue of its shape and color. Desirably it comprises plastic material or it may be a wire ring.

The invention will now be described in greater detail by way of example by means of the two embodiments illustrated in the drawing in which:
- Figure 1: is a partly sectional diagrammatic view of a first embodiment of the coupling according to the invention, and
- Figure 2: is a partly sectional diagrammatic view of a further embodiment of a coupling according to the invention with incorporated non-return valve.

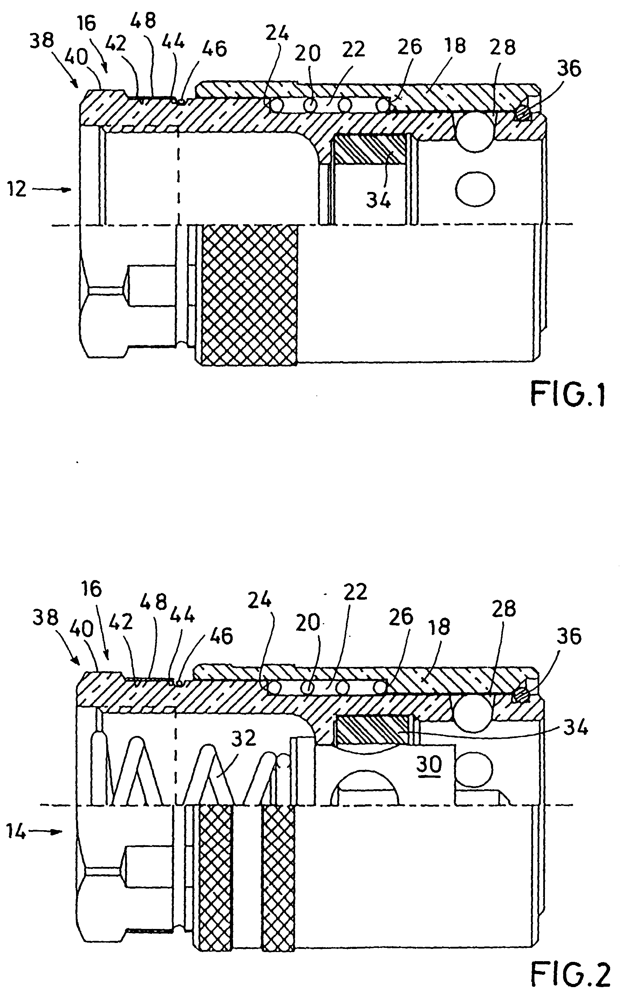

Referring first generally to Figures 1 and 2, it will be noted that the couplings illustrated therein are identical to each other, as regards the features according to the present invention. The embodiments illustrated in Figures 1 and 2 differ from each other in that the coupling generally indicated at 12 in Figure 1 does not have a non-return or check valve, whereas the coupling indicated generally at 14 in Figure 2 has a non-return or check valve as indicated at 30. Except for the non-return valve therefore the description set out hereinafter applies both in respect of the coupling 12 and also in respect of the coupling 14.

The coupling 12 in Figure 1 or the coupling 14 in Figure 2 has a plug sleeve 16 with a sliding sleeve 18 which is disposed over the plug sleeve 16 displaceably thereon in the longitudinal direction. A spring illustrated in the form of a coil spring 20 is disposed around the plug sleeve 16, within the sliding sleeve 18, in a recess 22 which is thus formed between the plug sleeve 16 and the sliding sleeve 18. The end of the coil spring 20 which is shown at the left in Figures 1 and 2 bears against a front face 24 on the plug sleeve 16 while the end of the coil spring 20 which is shown at the right in Figures 1 and 2 bears against a rear face 26 on the sliding sleeve 18. As a result the coil spring 20 urges the sliding sleeve 18 into the position relative to the plug sleeve 16 as shown in Figures 1 and 2, which is the locked position of the coupling.

Reference numberal 28 in Figures 1 and 2 identifies an axial ball bearing arrangement to facilitate the sliding movement of the sliding sleeve 18 on the plug sleeve 16.

Reference will be more specifically directed at this point to Figure 2 to consider the non-return valve 30 in the coupling 16, with a valve spring in the form of a coil spring 32. The coil spring 32 thus urges the valve member of the non-return valve 30 towards the right in Figure 2.

The two couplings 12 and 14 also include a sealing ring or gasket 34 while at the end of the couplings 12, 14 which is at the right in each of Figures 1 and 2 each coupling 12 and 14 has a holding ring 36. In the illustrated locked condition of the respective couplings the sliding sleeve 18 bears against the holding ring 36 under the thrust force applied to the sliding sleeve 18 by the coil spring 20.

At its end which is towards the left in each of Figures 1 and 2 the plug sleeve 16 has a flange generally indicated at 38. Wrench surfaces 40 are provided thereon.

The plug sleeve 16 further has a recessed portion 42 of the periphery of the plug sleeve 16, the recessed portion 42 being arranged at or at least adjacent to the left-hand end of the plug sleeve 16. It will be seen that the sliding sleeve 18 is partially guided and displaceable by and on the recessed portion 42 of the periphery of the plug sleeve 16.

Reference 44 denotes an identification groove in accordance with the present invention, which is provided in the recessed portion 42. Reference 46 denotes an identification ring which is disposed in the groove 44. Figures 1 and 2 also show an application of color as indicated at 48 which in this embodiment is disposed besides the groove 44. This means that the identification ring 46 and the color 48 can be provided independently of each other and also simultaneously. It will be appreciated that the color 48 may equally be disposed in the groove 44. The color can be for example paint and may be of any color such as white which contrasts with the surrounding surface of the arrangement.

The Figures show the coupling in a locked condition in which the coil spring 20 urges the sliding sleeve 18 into its limit position as defined by the holding ring 36. The recessed portion 42 and therewith the groove 44, the identication ring 46 and the color 48 are exposed when the coupling is in that locked condition. The user of the coupling can thus readily see the groove 44, the ring 46 and the color 48, and thus establish that the coupling is indeed in the locked condition.

To open the coupling the sliding sleeve 18 is displaced towards the left in the drawings. In that case it then covers over the recessed portion 42 with the groove 44, the ring 46 and the color 48.

## Claims

1. Coupling for coupling pipes or hoses carrying liquids or gases, comprising a plug sleeve (16) and a sliding sleeve (18) which is displaceable thereon between two limit positions or a locked position and an unlocked position respectively, and a coil spring (20) which is stressed between the plug sleeve (16) and the sliding sleeve (18) and which pushes the sliding sleeve into the locked position in the rest condition, wherein the sliding sleeve (18) is partially guided and displaceable by and on a recessed portion (42) of the periphery of the plug sleeve (16) and the recessed portion (42) is arranged at one end of the plug sleeve (16), characterized by an identification groove (44) which is provided in the recessed portion (42) and which is exposed in the locked condition of the sliding sleeve (18) and is covered over thereby in the unlocked position of the sliding sleeve (18).

2. Coupling according to claim 1, characterized by an easily visible material arranged in the identification groove (44).

3. Coupling according to claim 2, characterized in that the material is a color (48).

4. Coupling according to claim 2, characterized in that the material is an identification ring (46).

5. Coupling according to claim 4, characterized in that the identification ring (46) comprises plastic material.

6. Coupling according to claim 4, characterized in that the identification ring (46) is a wire ring.
